# EUROPÄISCHE PATENTSCHRIFT

(11) **EP 2 288 826 B1**
(45) Veröffentlichungstag und Bekanntmachung des Hinweises auf die Patenterteilung: **31.10.2012**
(21) Anmeldenummer: 09765690.4
(22) Anmeldetag: 14.05.2009
(51) Int. Cl.: F16H 63/30, B21D 53/88

(54) **VERFAHREN ZUR HERSTELLUNG EINER SCHALTFINGERANORDNUNG**
METHOD FOR PRODUCING A SHIFT FINGER ARRANGEMENT
PROCÉDÉ DE FABRICATION Du DISPOSITIF DE DOIGT DE CHANGEMENT DE VITESSES

(30) Priorität: 19.06.2008 DE 102008029265
(43) Veröffentlichungstag der Anmeldung: 02.03.2011
(73) Patentinhaber: Schaeffler Technologies AG & Co. KG, 91074 Herzogenaurach (DE)
(72) Erfinder: MAIER, Waldemar, 91074 Herzogenaurach (DE)
(86) Internationale Anmeldenummer: PCT/EP2009/055863
(87) Internationale Veröffentlichungsnummer: WO 2009/153110

(56) Entgegenhaltungen:
- EP-A- 1 719 935
- DE-A1- 4 432 382
- DE-A1- 19 904 021
- DE-A1-102004 036 369
- DE-U1- 8 422 582
- DE-U1- 29 923 146
- JP-A- 57 196 325

## Beschreibung

### Gebiet der Erfindung

Die Erfindung betrifft ein Verfahren zur Merstellung einer Schaltfingeranordnung gemäß dem Oberbegriff des Anspruchs 1, wie auch aus dem Dokument DE-A1-199 04 021 bekannt.

Derartige Schaltfingeranordnungen werden in Schaltmechanismen verwendet, um Schalt- bzw. Wählbewegungen von einem Benutzer oder einem Aktor auf ein Getriebe, insbesondere ein Schaltgetriebe, zu übertragen. Oftmals weisen derartige Schaltmechanismen eine Schaltwelle auf, auf die eine oder mehrere Schaltfingeranordnungen drehfest aufgesetzt sind. Die Schaltfingeranordnungen weisen einen Fingerabschnitt auf, welcher in eine Schaltschiene, eine Schaltgabel oder ein ähnliches Mitnehmerelement eingreift und dieses bei einer Bewegung, insbesondere einer Schwenkung der Schaltwelle bewegt.

Beispielsweise zeigt die Druckschrift DE 299 231 46 U1 eine Schaltvorrichtung für ein Wechselgetriebe von Fahrzeugen, welches eine Schaltwelle umfasst, auf die eine Hülse aufgesetzt ist, die einen Schaltfinger trägt. Der Schaltfinger greift im eingebauten Zustand formschlüssig in eine Schaltführung ein, die der Schaltwelle nebengeordnet ist.

Die Druckschrift DE 10 2004 036369 B4, die wohl dem nächstkommenden Stand der Technik bildet, offenbart eine Steuertrommelanordnung für ein Kraftfahrzeugwechselgetriebe. Auch diese Druckschrift zeigt eine Schaltwelle, die mit einem Schaltfinger drehfest verbunden ist, welcher in eine Schaltschiene eingreift. Der Schaltfinger ist auf einem Schaltfingerhalter befestigt, welcher mittels einer Spannhülse unverdrehbar und unverschiebbar auf der Schaltwelle festgelegt ist.

DE 44 32 382 offenbart die Herstellung einer Schaltfingerordnung mit Blechbauteilen in Differentialbauweise, deren Einzelteile aufwendig zueinander zu fügen sind.

JP 57 196325 A zeigt eine Schaltgabel, die einen Kragen zur Anbindung an eine Schaltwelle aufweist. Die Schaltgabel ist aus einem Blech hergestellt.

Der Erfindung liegt die Aufgabe zugrunde, ein Verfahren zur Herstellung einer Schaltfingeranordnung vorzuschlagen, welche mit hoher bzw. ausreichender Fertigungsgenauigkeit bei niedrigen Fertigungskosten herstellbar ist.

Diese Aufgabe wird durch ein Verfahren mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird obiges Herstellverfahren einer Schaltfingeranordnung für einen Schaltmechanismus vorgeschlagen, wobei der Schaltmechanismus vorzugsweise zur Übertragung beziehungsweise Umsetzung von Schalt- und/oder Wählbewegungen von einem Benutzer und/oder einem Aktor zu einem Getriebe, insbesondere einem Schaltgetriebe, (Zahnräder-)Wechselgetriebe in Automatik-, Halbautomatik-, oder manueller Bauweise ausgebildet ist. Vorzugsweise ist der Schaltmechanismus zumindest teilweise in einem Schaltdom, insbesondere in einem Schaltdomgehäuse integriert.

Die Schaltfingeranordnung umfasst einen Fingerabschnitt, welcher für die Betätigung eines Mitnehmerelements, insbesondere einer Schaltschiene oder Schaltgabel, ausgebildet und/oder angeordnet ist. Der Fingerabschnitt ist vorzugsweise als ein freier und/oder auskragender Abschnitt ausgebildet, welcher beispielsweise in ein Schaltmaul des Mitnehmerelements eingreifen kann.

Weiterhin umfasst die Schaltfingeranordnung einen Hülsenabschnitt, wobei der Hülsenabschnitt zur Festlegung des Fingerabschnitts auf einer Schaltwelle z.B. als rohrförmiger oder -ähnlicher Abschnitt ausgebildet ist. Vorzugsweise ist der Innendurchmesser des Hülsenabschnitts an den Außendurchmesser der Schaltwelle derart angepasst, dass dieser nur ein geringes Übermaß und/oder ein Passmaß aufweist.

Erfindungsgemäß wird der Fingerabschnitt und der Hülsenabschnitt als ein gemeinsames, insbesondere einstückiges Umformteil ausgebildet.

Dabei ist eine umformtechnische Fertigung der Schaltfingeranordnung im Vergleich zu einer fügetechnischen Lösung, wie sie aus dem Stand der Technik bekannt ist, zum einen, insbesondere bei großen Stückzahlen, kostengünstiger und zum anderen die Fertigungs-genauigkeit nach Einfahren des Umformprozesses sehr hoch, wohingegen bei einer fügetechnischen Lösung immer die gegenseitige Justage von Fingerabschnitt und Hülsenabschnitt eine mögliche Fehlerquelle darstellt.

Erfindungsgemäß wird der Hülsenabschnitt durch Kragenziehen, bzw. durch ein- oder mehrstufiges Kragenziehen aus einem ebenen Halbzeug, insbesondere Stahl, gefertigt. Bei dieser Ausführungsform ist es vorteilhaft, dass die Außenkontur der Schaltfingeranordnung, insbesondere der Fingerabschnitt durch einen Trennschnitt, insbesondere durch eine Stanzung, erzeugt werden kann.

Um eine weite Abstreckung des Hülsenabschnitts zu erreichen, wird dem Kragenziehen ein Vorlochen des ebenen Halbzeugs vorgeschaltet. Bei dieser möglichen Fertigungsvariante ergibt sich der Vorteil, dass insbesondere das freie Ende des Hülsenabschnitts eine große Maßhaltigkeit und wenige Zerklüftungen oder Risse aufweist.

Um einen Hülsenabschnitt in ausreichender axialer Länge zu erreichen, ist es bevorzugt, wenn das Halbzeug eine Dicke von mehr als 5 mm, vorzugsweise mehr als 6 mm und/oder weniger als 10 mm vorzugsweise weniger als 9 mm aufweist. Diese Dicke des Halbzeugs hat sich als vorteilhaft erwiesen, um - wie es ebenfalls bevorzugt ist - eine Länge des Hülsenabschnitts zu erreichen, welche größer als die Dicke des Halbzeugs ist.

Mit dem Vorteil, einen höheren Umformgrad und/oder eine größere Länge des Hülsenabschnitts zu erreichen, ist es bevorzugt, wenn in einem ersten Umformschritt ein kreisrunder Abschnitt mit einem Durchmesser größer als der Außendurchmesser des Hülsenabschnitts durch- und in einem zweiten Verfahrensschritt der Kragen ausgezogen wird.

Bei einer Weiterführung der Erfindung wird ein Führungsstift in dem Umformteil zur Führung in einer Schaltkulisse angeordnet. Neben der Betätigung des Mitnehmerelements umfasst die Schaltfingeranordnung diesen Führungsstift. Mit einem derartigen Führungsstift ist es möglich, dass die Schaltfingeranordnung und die damit verbundene Schaltwelle bei Schalt- bzw. Wählvorgängen durch eine Schaltkulisse zwangsgeführt wird. Der Führungsstift kann als separates Teil eingesetzt oder einstückig und/oder einmaterialig an der Schaltfingeranordnung angeformt sein.

Bei einer alternativen und/oder ergänzenden Ausführungsform der Erfindung wird die Schaltfingeranordnung mit einer Rastierplatte ausgestattet, welche mit dem Umformteil, insbesondere stoffschlüssig verbunden wird und eine Rastkontur aufweist. Die Rastkontur ist für ein Zusammenwirken mit einer Raste, insbesondere mit einer Kugelraste, ausgebildet und/oder geeignet, so dass über die Rastkontur die Schalt- und/oder Wählkraft des Schaltmechanismus bestimmt werden kann.

In einer Weiterführung der Erfindung wird das Umformteil mindestens mit einem Mitnahmeflügel versehen, welcher zur Mitnahme einer Verriegelungsschiene in axialer Richtung der Schaltwelle ausgebildet ist. Der Mitnahmeflügel ist beispielsweise als ein teilkreisförmiger Abschnitt des Umformteils ausgebildet, wobei der Mittelpunkt des Teilkreises vorzugsweise in der Drehachse der Schaltfingeranordnung angeordnet ist. Vorzugsweise sind der Fingerabschnitt und optional ergänzend der Mitnahmeflügel auf einem gemeinsamen Plattenabschnitt des Umformteils dargestellt, wobei der Plattenabschnitt vorzugsweise als ein insbesondere unverformter Ausschnitt des ebenen Halbzeugs ausgebildet ist.

Weitere Merkmale, Vorteile und Wirkungen der Erfindung ergeben sich aus der nachfolgenden Beschreibung sowie den beigefügten Figuren. Dabei zeigen:
- Fig. 1: eine schematische, dreidimensionale Draufsicht von unten auf eine Schaltvorrichtung ;
- Fig. 2: eine schematische, dreidimensionale Draufsicht von unten auf das Schaltdomgehäuse der Schaltvorrichtung in Figur 1;
- Fig. 3: eine schematische, dreidimensionale Draufsicht von unten das Schaltdomgehäuse in Figur 2 in leicht gedrehter Darstellung;
- Fig. 4: eine schematische, dreidimensionale Draufsicht von schräg oben auf das Schaltdomgehäuse der Figuren 2 und 3;
- Fig. 5: eine Seitenansicht mit durchgezogenen, verdeckten Linien der Schaltvorrichtung in der Figur 1;
- Fig. 6: eine schematische, dreidimensionale Seitenansicht auf das Hebelwerk der Schaltvorrichtung in der Figur 1 in Detaildarstellung;
- Fig. 7: eine schematische, dreidimensionale Seitenansicht auf das Hebelwerk der Schaltvorrichtung in der Figur 1 in Detaildarstellung aus einer anderen Perspektive;
- Fig. 8: eine schematische, dreidimensionale Ansicht der Verriegelungsmechanik der Schaltvorrichtung in der Figur 1;
- Fig. 9, 10: schematische, dreidimensionale Darstellungen des Fingerabschnittsträgers gemäß dem erfindungsgemäßen Herstellverfahren der Schaltvorrichtung in der Figur 1;
- Fig. 11, 12: den Fingerabschnittsträger gemäß dem erfindungsgemäßen Herstellverfahren in den Figuren 9 und 10 in Draufsicht auf die Prägseite bzw. in Seitenansicht;
- Fig. 13: eine schematische, dreidimensionale Darstellung des Fingerabschnittsträgers gemäβ dem erfindungsgemäβen Herstellverfahren der Figuren 9 bis 12 mit aufgesetztem Rastierblech;
- Fig. 14, 15: schematische dreidimensionale Darstellungen eines anderen Fingerabschnittsträgers gemäß dem erfindungsgemäßen Herstellverfahren der Schaltvorrichtung in der Figur 1,

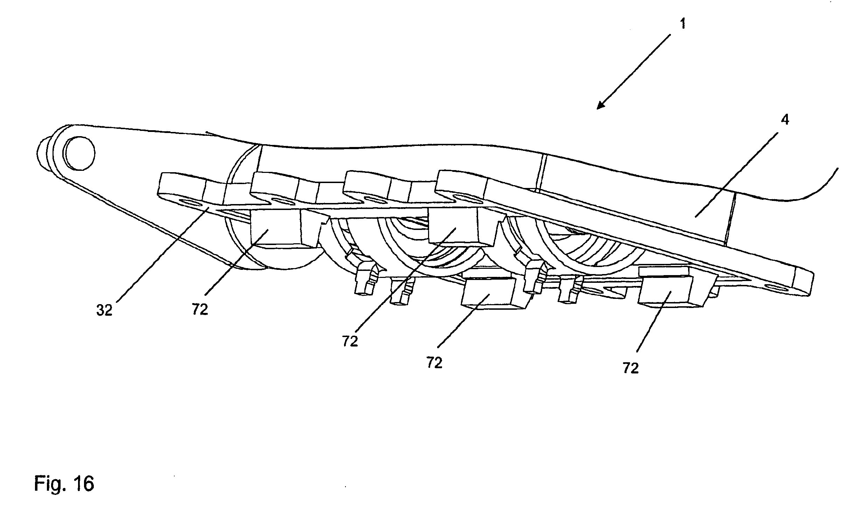

- Figur 16: ein weiteres Biespiel eines Schaltdomgehäuses.

Die nachfolgenden Figuren zeigen Übersichtsdarstellungen und Detaildarstellungen. Gleiche oder einander entsprechende Teile sind jeweils mit gleichen beziehungsweise einander entsprechenden Bezugszeichen versehen. Es ist jedoch darauf hinzuweisen, dass die Einzelbaugruppen oder Einzelkomponenten auch in anderen funktionsähnlichen Vorrichtungen einsetzbar sind.

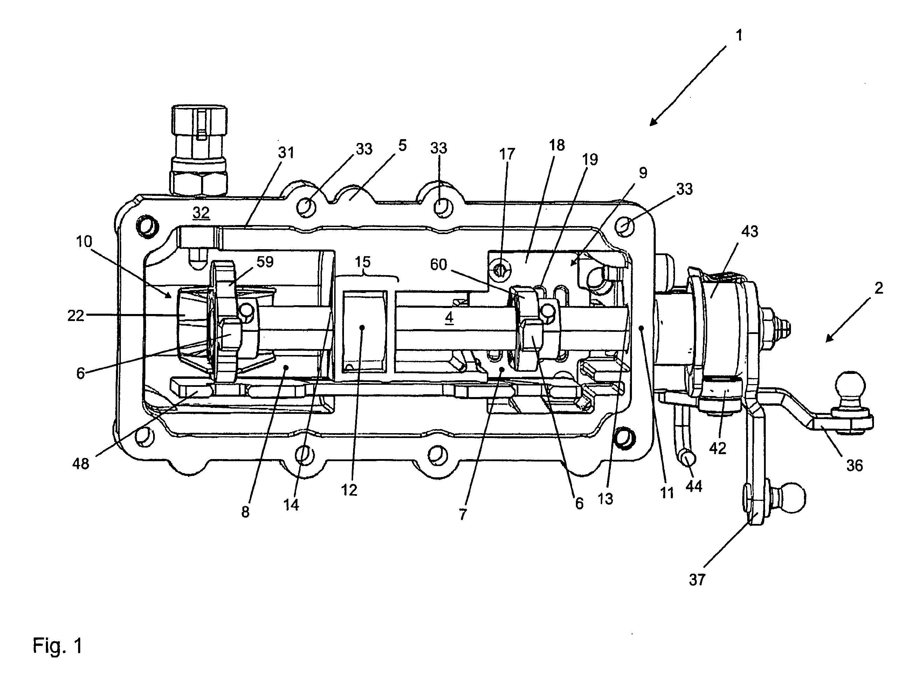

Die Figur 1 zeigt in einer schematischen dreidimensionalen Darstellung eine Schaltvorrichtung 1. Die Schaltvorrichtung 1 ist ausgebildet, um eine Wähl- und/oder Schaltbewegung, welche von einem Benutzer oder einem Aktor eingeleitet wird, umzusetzen und an ein nachgeschaltetes Getriebe, insbesondere ein Zahnräderwechselgetriebe, weiterzugeben.

Zum Einleiten der Schalt- und/oder Wählbewegungen zeigt die Schaltvorrichtung 1 ein Hebelwerk 2, welches mechanische Schnittstellen, zum Beispiel in Form von Kugelköpfen 3, zur mechanischen Kopplung zum Beispiel mit Bowdenzügen oder Schaltstangen aufweist.

Die Wähl- und/oder Schaltbewegungen werden auf eine Schaltwelle 4 übertragen, die in einem Schaltdomgehäuse 5 in ihrer axialen Erstreckung verschiebbar und schwenkbar gelagert ist. An der Schaltwelle 4 sind Schaltfingerabschnitte 6 befestigt, welche die mittlerweile umgesetzte Schalt- und/oder Wählbewegung auf nicht dargestellte Schaltschienen überträgt. Die Schaltschienen erstrecken sich senkrecht zu der Schaltwelle 4, so dass diese bei einer Schwenkbewegung der Schaltfingerabschnitte 6 in Längsrichtung verschoben werden. Die Schaltfingerabschnitte 6 können wahlweise unmittelbar in die Schaltschienen oder über Mitnehmerelemente an den Schaltschienen angreifen. Üblicherweise sind jedem Schaltfingerabschnitt 6 mehrere Schaltschienen, zum Beispiel drei Schaltschienen, zugeordnet, welche in Abhängigkeit der axialen Lage der Schaltwelle 4 von den Schaltfingerabschnitten 6 selektiv betätigt werden und denen - insbesondere bis auf den Rückwärtsgang - jeweils zwei wählbare Gänge, zum Beispiel erster-zweiter Gang oder dritter-vierter Gang, zugeordnet sind.

Das Schaltdomgehäuse 5 weist zwei voneinander räumlich getrennte Kammerbereiche 7, 8 auf, durch beziehungsweise in die sich die Schaltwelle 4 erstreckt. In dem ersten Kammerbereich 7, durch den sich die Schaltwelle 4 vollständig oder durchgehend erstreckt, ist eine Kulissenanordnung 9 realisiert, die eine Zwangsführung der Schaltwelle 4 hinsichtlich der Verschiebe- und/oder Schwenkbewegungen definiert. In dem zweiten Kammerbereich ist eine Rastanordnung 10 positioniert, welche ein Einrasten der Schaltwelle 4 bei bestimmten Positionen, insbesondere bei zu einem gewählten und/oder eingelegten Gang korrespondierenden Positionen, umsetzt. Zudem wird durch die Rastanordnung 10 die aufzuwendende Schalt- bzw. Wählkraft gesteuert. In dem zweiten Kammerbereich 8 endet die Schaltwelle 4 mit einem freien, ungelagerten Ende.

Die Schaltwelle 4 ist über zwei Lagerbereiche 11, 12 gelagert, wobei der erste Lagerbereich 11 über eine Durchgangsöffnung 13 in dem Schaltdomgehäuse 5 realisiert ist. Der zweite Lagerbereich 12 wird durch eine zweite Durchgangsöffnung 14 gebildet, welche in einem Zwischensteg 15 zwischen dem ersten Kammerbereich 7 und dem zweiten Kammerbereich 8 eingebracht ist. Durch diese Lageranordnung ist die Schaltwelle 4, insbesondere im Hinblick auf das freie Ende im Bereich der Rastanordnung 10, fliegend gelagert. Die erste und die zweite Durchgangsöffnung 13, 14 weisen unterschiedliche Durchmesser auf, wobei die erste Durchgangsöffnung 13 einen größeren Durchmesser aufweist als die zweite Durchgangsöffnung 14, so dass beide Durchgangsöffnungen 13, 14 optional in einem gemeinsamen Arbeitsgang mit einem Stufenbohrer oder dergleichen hochpräzise zueinander eingebracht werden können.

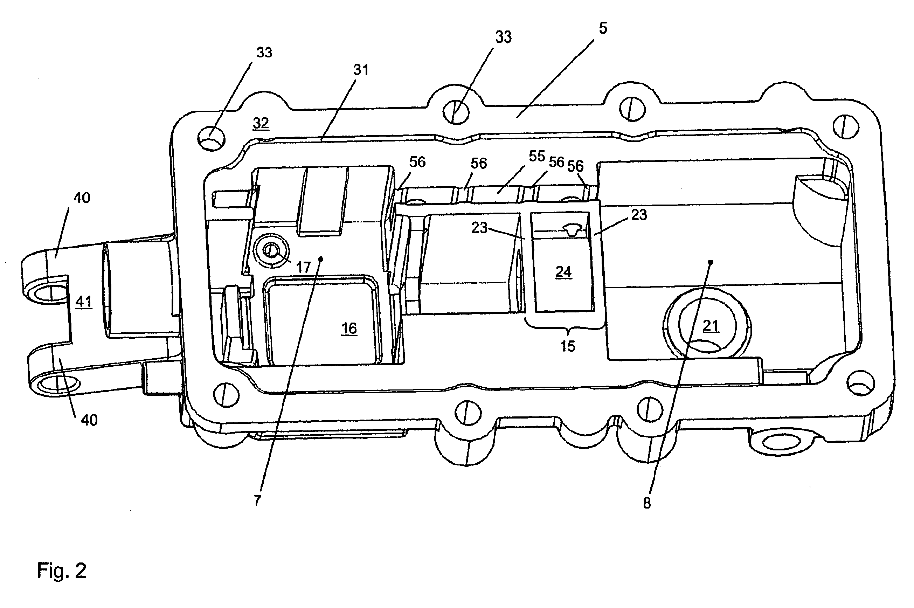

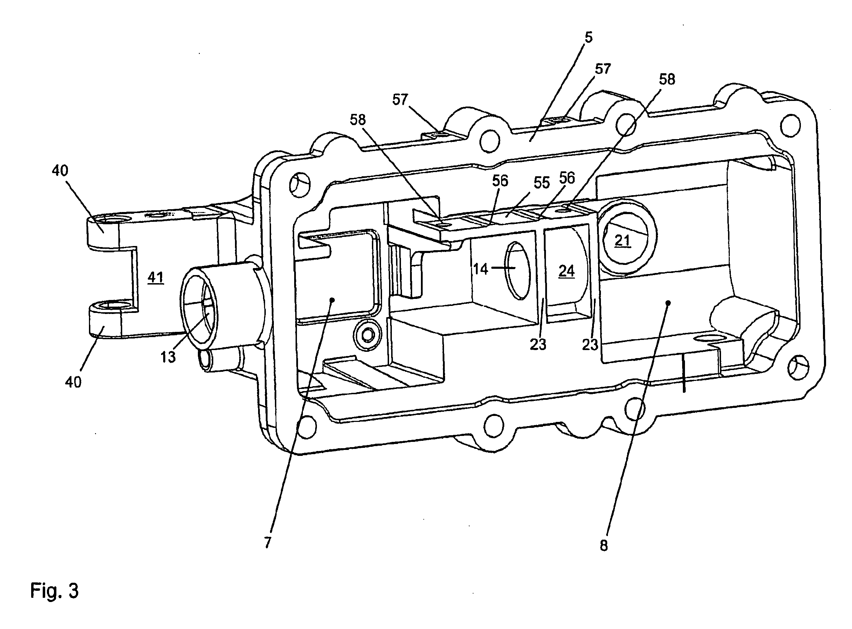

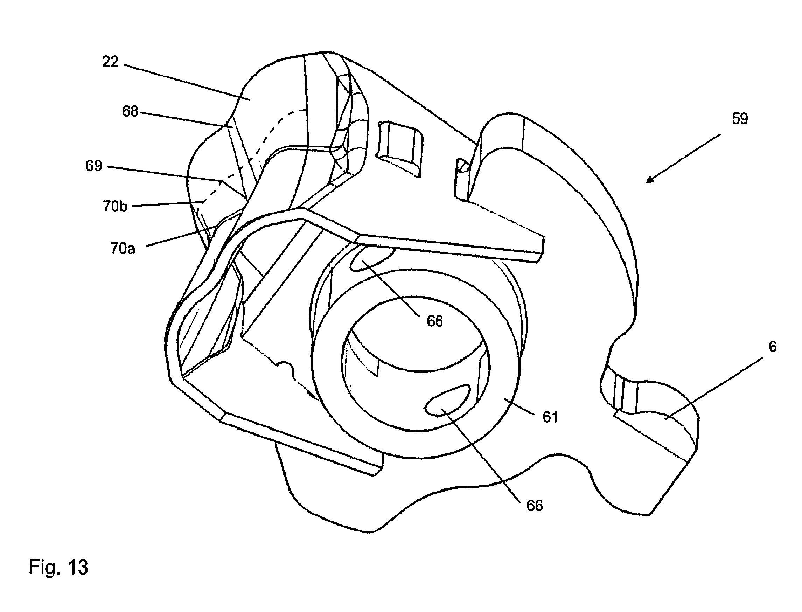

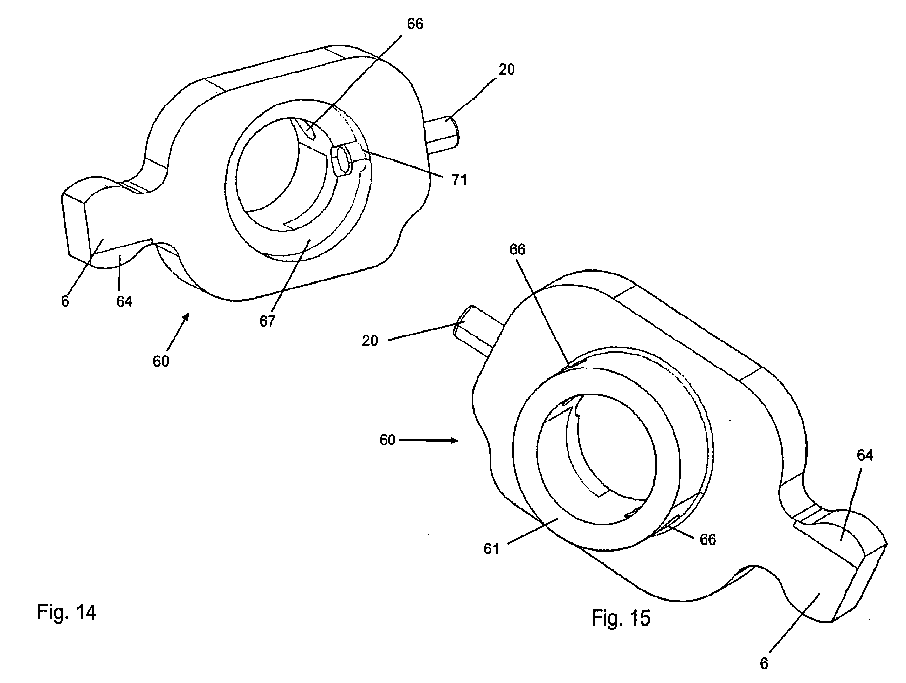

Die Figuren 2 und 3 zeigen zwei unterschiedliche, dreidimensionale Ansichten des Schaltdomgehäuses 5, welches in diesem Beispiel als ein einstückiges Aluminiumdruckgussgehäuse ausgebildet ist und wobei alle anderen Komponenten der Schaltvorrichtung 1 zeichnerisch unterdrückt sind. In dem ersten Kammerbereich 7 ist eine Aufnahme 16 sowie Befestigungsmittel 17 zur Aufnahme einer Kulissenplatte 18 (Figur 1) angeordnet. Die Kulissenplatte 18 kann beispielsweise in das Schaltdomgehäuse 5 eingeschraubt, eingepresst, eingeklebt oder verstemmt werden und zeigt - wie es sich andeutungsweise aus der Figur 1 ergibt - einen freien Bereich 19, in die ein Führungsstift 20 (Figuren 14 und 15) eingreifen kann und die eine Schaltkulisse für die Schaltwelle 4 bildet. In dem zweiten Kammerbereich 8 ist eine Aussparung 21 zur Aufnahme einer Raste, insbesondere einer Kugelraste vorgesehen, welche ein Rastblech 22 (Figur 13) bei den Schalt- bzw. Wählbewegungen der Schaltwelle 4 abfährt.

Die erste Durchgangsöffnung 13 beziehungsweise die zweite Durchgangsöffnung 14 sind jeweils zur Aufnahme eines Lagers, insbesondere eines Gleitlagers, zur Lagerung der Schaltwelle 4 ausgebildet.

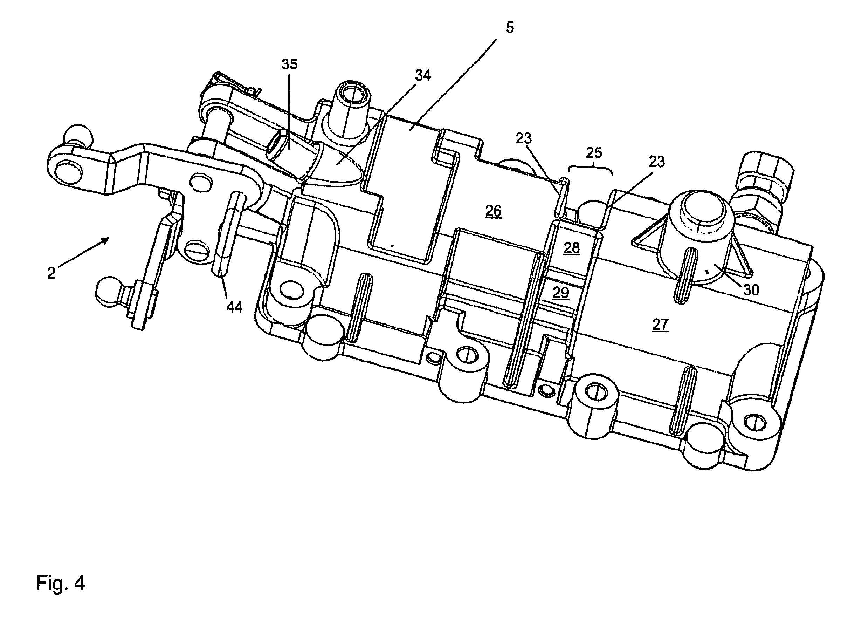

Der Zwischensteg 15 weist von der Innenseite des Schaltdomgehäuses 5 betrachtet zwei Seitenplatten 23 auf, die den ersten Kammerbereich 7 beziehungsweise den zweiten Kammerbereich 8 begrenzen und senkrecht zu der Schaltwelle 4 ausgerichtet sind. Zudem umfasst der Zwischensteg 15 eine im Querschnitt halbkreisförmig ausgebildete Lagerabdeckung 24, welche im Durchmesser an den Außendurchmesser des die Schaltwelle 4 aufnehmenden Lagers angepasst ist. Betrachtet man das Schaltdomgehäuse 5 von der Außenseite, wie es beispielsweise in der Figur 4 dargestellt ist, so ist korrespondierend zu dem Zwischensteg 15 ein Einschnürungsbereich 25 vorgesehen, welcher zwischen einer ersten Kuppel 26 und einer zweiten Kuppel 27 angeordnet ist. Die erste Kuppel 26, korrespondiert zu dem ersten Kammerbereich 7, die zweite Kuppel 27 korrespondiert zu dem zweiten Kammerbereich 8. Seitlich sind erste beziehungsweise zweite Kuppel 26, 27 durch die Seitenplatten 23 begrenzt. Zur gegenseitigen Abstützung der Seitenplatten 26, 27 ist ein Axialsteg 28 vorgesehen. Die außenseitige Abstützung des Lagers für die Schaltwelle 4 erfolgt durch einer ebenfalls im Querschnitt halbkreisförmig ausgebildeten Lagerabdeckung 29, welche sich zusammen mit der inneren Lagerabdeckung 24 zu einem Hülsenkörper ergänzt. Dieser komplexe Aufbau des Zwischenstegs 15 ist eine fertigungsgerechte Realisierung des Schaltdomgehäuses 5, da sämtliche Wandungen in diesem Bereich, also insbesondere die Lagerabdeckungen 24, 29 und die Seitenplatten 23 eine einheitliche Dicke aufweisen, so dass bei dem Druckgussverfahren Lunkerbildung oder Verzug des Bauteils etc. vermieden oder zumindest minimiert werden kann. Dies wird vorteilhafterweise auch dadurch erreicht, dass korrespondierend zu dem Zwischensteg 15 außenseitig der Einschnürungsbereich 25 vorgesehen ist. Aus der Figur 4 ergibt sich auch, dass die Aussparung 21 (Figur 2, 3) in eine Aufnahme 30 für einer Raste weitergeführt wird.

Wie sich aus den Figuren 1 bis 3 ergibt, zeigt das Schaltdomgehäuse 5 eine rechteckige Kopplungsöffnung 31 über die das Schaltdomgehäuse 5 mit einem weiteren Gehäuse, in dem die Schaltschienen, etc. angeordnet sind, kommunizierend verbindbar ist. Die Kopplungsöffnung 31 wird durch einen umlaufenden Dichtbereich 32 umschlossen, welcher eine Dichtebene zu dem nachfolgenden Gehäuse bildet. Zur Befestigung des Schaltdomgehäuses 5 an dem anderen Gehäuse sind Durchgangslöcher 33 im Dichtbereich 32 vorgesehen. Zu unterstreichen ist, dass die Kopplungsöffnung 31 und die Schaltwelle 4 gleichgerichtet angeordnet sind, und dass die Schaltwelle 4 in dem Schaltdomgehäuse 5 derart angeordnet ist, dass diese nicht über die Dichtungsebene des Dichtungsbereichs 32 herausragt.

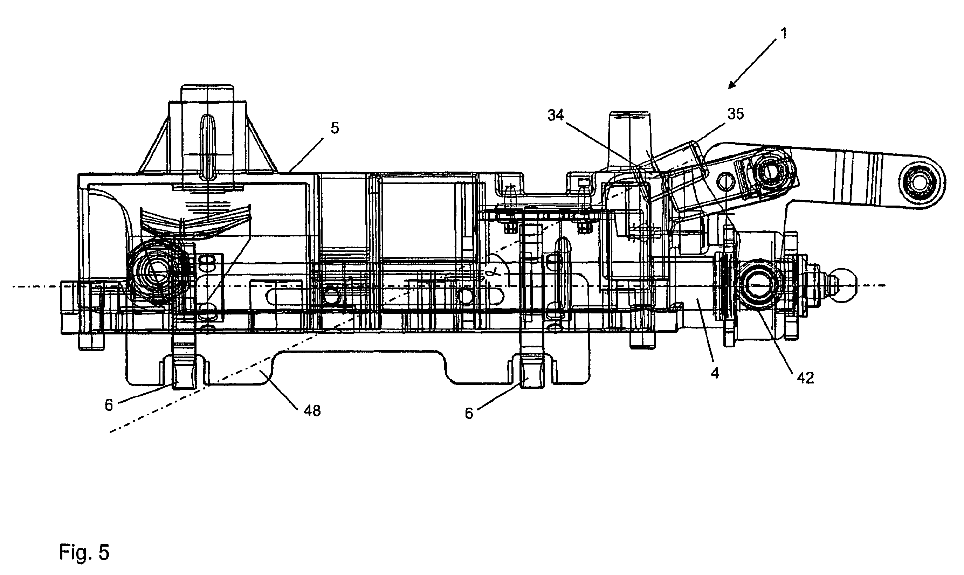

Eine weitere Besonderheit des einstückigen Schaltdomgehäuses 5 stellt die Entlüftungsaufnahme 34 dar, welche zur Aufnahme eines Entlüftungsrohres oder Stopfens 35 ausgebildet ist. Um im eingebauten Zustand ein Auslaufen oder Ausspritzen von Getriebeöl zu verhindern, ist die Erstreckung der Entlüftungsaufnahme 34 zu der Erstreckung der Schaltwelle 4 um einen Winkel α (Figur 5) zwischen 20° und 30° geneigt. Die Berücksichtigung der Einbaulage des Schaltdomgehäuses 5 bei dem Entwurf erlaubt es, die Entlüftungsaufnahme 34 auch bei einem schräg aufgesetzten Schaltdomgehäuse 5 so zu positionieren, dass ein Rückhalt von Getriebeöl optimal verwirklicht ist.

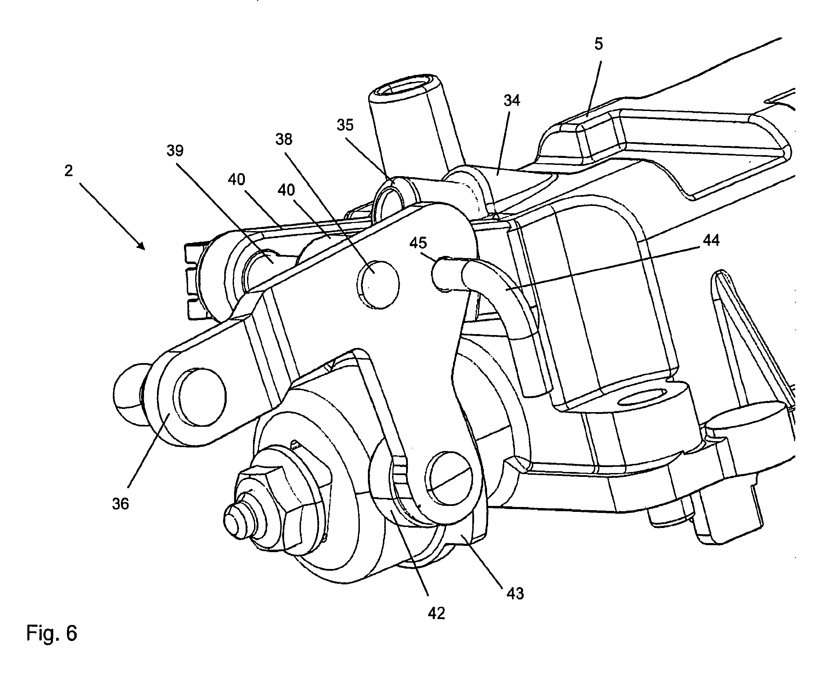

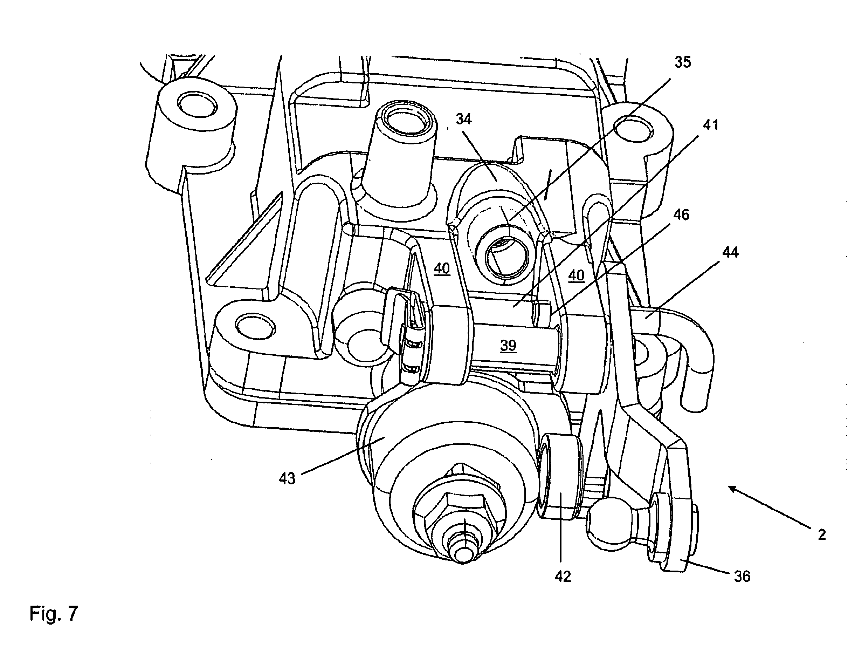

Das Hebelwerk 2, welches in den Figuren 1, 4, 5 und zudem in den schematischen dreidimensionalen Darstellungen der Figuren 6 und 7 dargestellt ist, erlaubt die Betätigung der Schaltwelle 4, so dass die in axialer Richtung verschoben und um ihre Längserstreckung geschwenkt werden kann. Hierzu weist das Hebewerk 2 - wie es am besten aus der Figur 1 zu ersehen ist - einen Übertragungswählhebel 36, welcher zur Übertragung einer Bewegung von einem der Kugelköpfe 3 in einen axialen Versatz der Schaltwelle 4 ausgebildet und/oder angeordnet ist und ein Übertragungsschalthebel 37, welcher zur Übertragung einer Schaltbewegung von dem anderen Kugelkopf 3 in eine Verschwenkung der Schaltwelle 4 ausgebildet und/oder angeordnet ist. Der Übertragungsschalthebel 37 ist mit der Schaltwelle 4 drehfest verbunden und überträgt die Schaltbewegung unmittelbar ohne ein zwischengeschaltetes Schwenklager. Der Übertragungswählhebel 36 ist dagegen über ein Schwenklager 38 auf dem Schaltdomgehäuse 5 schwenkbar gelagert. Das Schwenklager 38 weist einen Schwenkzapfen 39 auf, welcher in zwei einstückig an das Schaltdomgehäuse 5 angeformte Seitenstege 40 aufgenommen ist. Die Seitenstege 40 sind zur Erhöhung der mechanischen Stabilisierung über einen Verbindungsabschnitt 41 miteinander verbunden, wobei das Verhältnis der Längserstreckung der Seitenstege 40 und dem Verbindungsabschnitt 41 bei diesem Ausführungsbeispiel in etwa 3 : 2 entspricht. Auch der Verbindungsabschnitt 41 ist einstückig mit dem Schaltdomgehäuse 5 verbunden.

Der Übertragungswählhebel 36 weist an seinem ersten freien Ende den Kugelkopf 3 und an seinem zweiten freien Ende eine Rolle 42 auf, welche zur Betätigung der Schaltwelle 4 ausgebildet und/oder angeordnet ist. Die freien Enden beziehungsweise die Aufnahmen der Betätigungselemente Kugelkopf 3 beziehungsweise Rolle 42 sind bezüglich der Lage des Schwenklagers 38 in etwa rechtwinklig und/oder dreiecksförmig zueinander angeordnet. Zur Erhöhung der Stabilität des Übertragungswählhebels 36 ist der Hebelarm mit dem Kugelkopf 3 ein- oder mehrfach hier beispielsweise zweifach abgewinkelt ausgebildet. Die Rolle 42 ist in Richtung der Schaltwelle 4 auf einem radial abstehenden Rand einer Kappe 43 und in axialer Gegenrichtung - wie sich insbesondere aus der Figur 1 ergibt - auf dem Übertragungsschalthebel 37 gelagert. Durch eine Betätigung des Übertragungswählhebels 36 wird dieser um sein Schwenklager 38 geschwenkt und - je nach Betätigungsrichtung - wird die Rolle 42 in axialer Richtung auf das Schaltdomgehäuse 5 oder in Gegenrichtung bewegt, wobei die Rolle 42 über die Kappe 43 beziehungsweise den Übertragungsschalthebel 37 die Schaltwelle 4 in axialer Richtung verschiebt.

Als Transport- und/oder Montagesicherung weist die Schaltvorrichtung 1 ein Sperrelement in Form eines Sperrstiftes 44 auf, welcher im gesperrten Zustand des Schaltvorrichtung 1 eingesetzt und im entsperrten Zustand vollständig entnommen ist. Der Sperrstift 44 ist bei dieser Ausführungsform als ein gebogenes Rundmaterial mit einem kreisrunden Querschnitt ausgebildet, welcher durch ein erstes Sperrloch 45 in dem Übertragungswählhebel 36 und ein zweites Sperrloch 46 in einem der Seitenstege 40 geführt ist, die in der gesperrten Stellung fluchtend zueinander angeordnet sind. Der Sperrstift 44 - oder für andere Ausführungsbeispiele allgemeiner formuliert - das Sperrelement setzt die Funktion um, den Übertragungswählhebel 36 gegen das Schaltdomgehäuse 5 zu arretieren. Diese Art der Transport- und Montagesicherung weist zwei Besonderheiten auf: Zum einen ist die Schaltwelle 4 über das Sperrelement direkt an dem Schaltdomgehäuse 5 gesperrt, so dass die Schaltvorrichtung 1 als eine komplette, gesperrte Baueinheit an ein Getriebe montiert werden kann. Zum zweiten ist über das Sperrelement nur und ausschließlich einer der Übertragungshebel, bei diesem Ausführungsbeispiel der Übertragungswählhebel 36, gesperrt, wohingegen der andere Übertragungshebel, bei diesem Ausführungsbeispiel der Übertragungsschalthebel 37, frei läuft und z.B. eine Schaltbewegung der Schaltwelle 4 auch im gesperrten Zustand ermöglicht ist. Bei der Montage ist es demzufolge möglich, die Schaltwelle 4 in axialer Richtung zu arretieren, in Umlaufrichtung jedoch freilaufend zu lassen, und so die die Montagearbeit zu erleichtern.

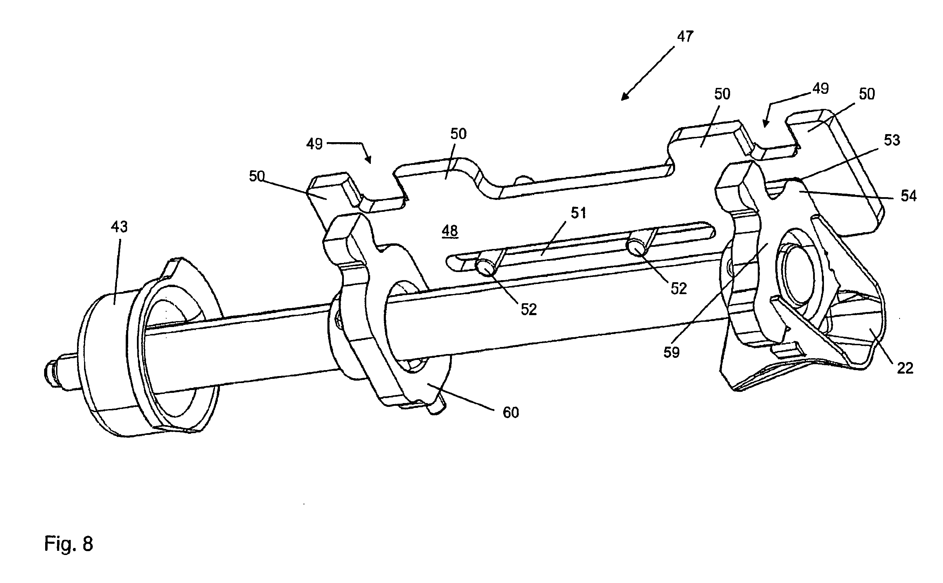

Die Figur 8 zeigt eine schematische dreidimensionale Darstellung der Schaltvorrichtung 1, wobei eine Mehrzahl der Bestandteile, insbesondere das Schaltdomgehäuse 5 in der Darstellung grafisch unterdrückt ist. In der Figur 8 sind die Funktionselemente eines Verriegelungsmechanismus 47 gezeigt, welche in Zusammenwirkung mit dem Schaltdomgehäuse 5 eine Verriegelung der Schaltschienen beziehungsweise der Mitnehmerelemente erlaubt. Aufgabe des Verriegelungsmechanismus 47 ist es, ein Verschalten, also ein Diagonalschalten bei der Betätigung der Schaltvorrichtung 1 zu verhindern. Wie bereits erläutert, sind jedem Schaltfingerabschnitt 6 eine Mehrzahl von senkrecht zu der Schaltwelle 4 angeordnete Schaltschienen zugeordnet, welche parallel zueinander positioniert sind und jeweils ein Schaltmaul zur Aufnahme des Schaltfingerabschnitts 6 aufweisen. Durch die axiale Verschiebung der Schaltwelle 4 wird die zu betätigende Schaltschiene ausgewählt, durch Verschwenken der Schaltwelle 4 wird in dem nachgeschalteten Getriebe über eine Längsverschiebung der Schaltschiene der zu der Schaltschiene und Schieberichtung korrespondierende Gang eingelegt. Aufgabe des Verriegelungsmechanismus 47 ist nun, ausschließlich die zu betätigende Schaltschiene freizugeben und die jeweils dazu benachbarten Schaltschienen gegenüber einer Bewegung in Längsrichtung der Schaltschienen zu sperren. Hierzu weist der Verriegelungsmechanismus 47 ein Verriegelungsblech 48 auf, welches im Wesentlichen aus einem ebenen Blech gefertigt ist. Das Verriegelungsblech 48 zeigt zwei randseitig geöffnete und im Querschnitt rechteckige Schaltschienenmäuler 49, die von benachbarten Sperrbereichen 50 umgeben sind. Die in axialer Richtung der Schaltwelle 4 freie Breite der Schaltschienenmäuler 49 ist auf die Breite der Schaltschiene so abgestimmt, dass sich jeweils genau eine Schaltschiene frei in den Schaltschienenmäulem 49 bewegen kann. Die jeweils dazu benachbarten Schaltschienen sind jedoch durch die Sperrbereiche 50 gegenüber einer Betätigung durch den Schaltfingerabschnitt 6 gesperrt. Das Verriegelungsblech 48 weist im Mittelbereich ein Langloch 51 auf durch das zwei Fixierstifte 52 geführt sind, welche in dem Schaltdomgehäuse 5 ortsfest befestigt sind. Ferner weist das Verriegelungsblech 48 eine Mitnahmeöffnung 53 auf, in die ein Mitnahmeflügel 54, welcher fest mit der Schaltwelle 4 verbunden ist, eingreift.

Bei einer axialen Verschiebung der Schaltwelle 4 greift der Mitnahmeflügel 54 in die Mitnahmeöffnung 53 ein und verschiebt entlang des Langlochs 51 das Verriegelungsblech 48 parallel und/oder synchron mit der Schaltwelle 4. Durch die Mitnahme des Verriegelungsblechs 48 durch die Schaltwelle 4 in axialer Richtung werden in gleicher Weise die Schaltschienenmäuler 49 verschoben und auf diese Weise die in der neuen Position ausgewählten Schaltschienen durch die Schaltschienenmäuler 49 freigegeben und die jeweils nichtgewählten Schaltschienen durch die Sperrbereiche 50 gesperrt. Der Mitnahmeflügel 54 ist dabei so ausgebildet, dass in jeder möglichen Stellung in Umfangsrichtung der Mitnahmeflügel 54 im Eingriff mit den Rändern der Mitnahmeöffnung 53 steht. Die Aufnahme des Verriegelungsblechs 48 in dem Schaltdomgehäuse wird nachfolgend anhand der Figuren 2 und 3 erläutert.

Das Schaltdomgehäuse 5 weist zur Führung des Verriegelungsblechs 48 einen eingeformten Führungskanal 55 auf, welcher sich parallel zur Längserstreckung der Schaltwelle 4 erstreckt. Der Führungskanal 55 ist im Querschnitt senkrecht zur Längserstreckung der Schaltwelle 4 U-förmig ausgebildet, so dass das Verriegelungsblech 48 von drei Seiten geführt ist. Der Führungskanal 55 weist an den Seitenflächen Führungsmittel in Form von Stegen 56 auf, welche eine reibungsarme Führung des Verriegelungsblechs 48 erlauben. Der Führungskanal 55 erstreckt sich zwischen dem ersten Kammerbereich 7 und dem zweiten Kammerbereich 8, so dass auch das Verriegelungsblech 48 in beide Kammerbereiche 7, 8 eingreift. Zur Festlegung des Verriegelungsblechs 48 weist das Schaltdomgehäuse 5 Aufnahmeöffnungen, bei diesem Ausführungsbeispiel ausgebildet als Bohrungen 57, auf, so dass die Fixierstifte 52 von außen zunächst durch die Wandung des Schaltdomgehäuses 5, dann durch das Langloch 51 und schließlich in einen Sacklochabschnitt 58 eingetrieben werden können. Das Verriegelungsblech 48 in einem eingebauten Zustand ist beispielsweise in der Figur 1 zu erkennen. Aus der Figur 5 ergibt es sich, dass das Verriegelungsblech 48 über die Dichtungsebene übersteht und in etwa mit den Fingerabschnitten 6 abschließt. Bei der Ausbildung des Verriegelungsblechs 48 beziehungsweise dessen Aufnahme sind selbstverständlich Modifikationen denkbar, so kann statt des einen Langlochs 51 mehrere Langlöcher vorgesehen sein. Hervorzuheben ist jedoch, dass der Führungskanal 55 in das Schaltdomgehäuse 5 eingeformt ist, und dass das Verriegelungsblech 48 als ein verhältnismäßig einfaches Bauteil ausgebildet ist, welches günstig herstellbar ist. Der Verriegelungsmechanismus 47 ist somit insgesamt fertigungstechnisch günstig umsetzbar.

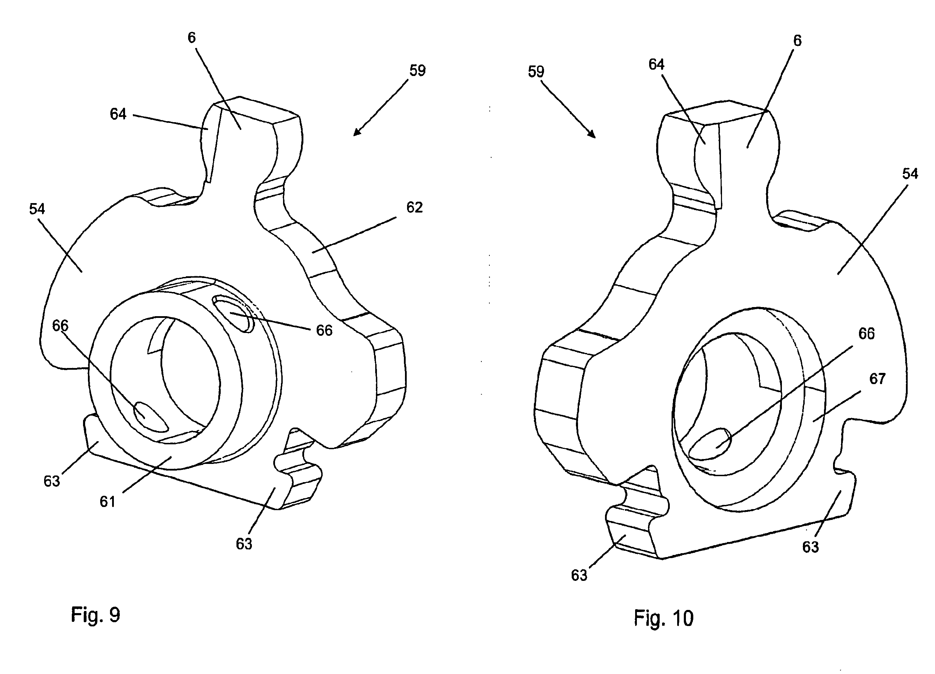

Die Figuren 9 bis 15 zeigen jeweils verschiedene Ansichten der Schaltfingerträger 59 bzw. 60 gemäß dem erfindungsgemäßen Herstellverfahren, welche jeweils einen der Schaltfingerabschnitte 6 tragen. Der Schaltfingerträger 59 ist an dem freien Ende der Schaltwelle 4 angeordnet und trägt ergänzend zu dem Schaltfingerabschnitt 6 den Mitnahmeflügel 54. Der Schaltfingerträger 59 ist in den Figuren 9 bis 13 in verschiedenen Darstellungen gezeigt.

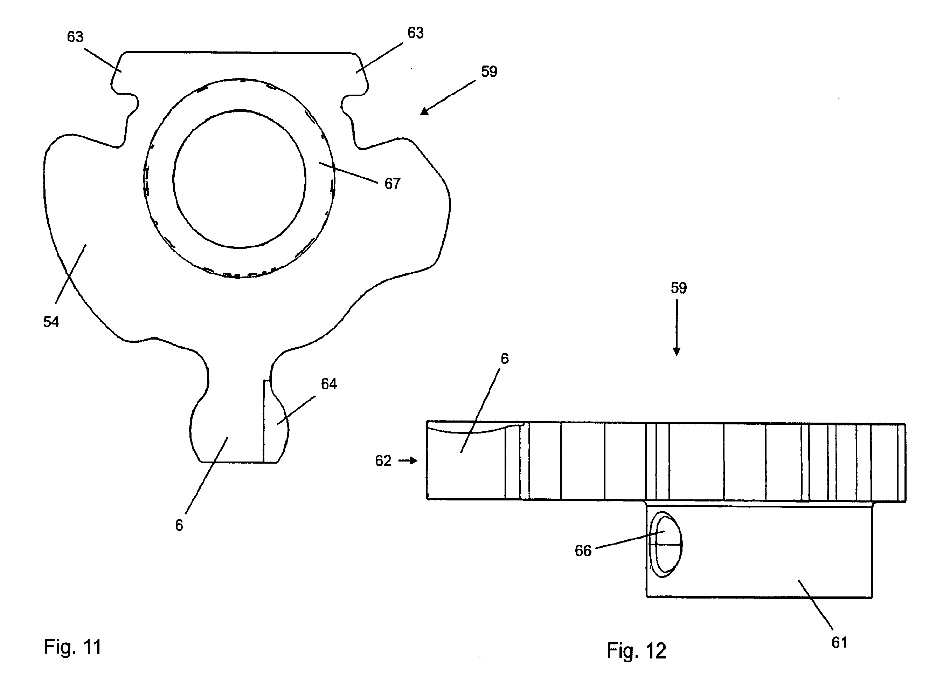

Der Schaltfingerträger 59 ist als ein einstückiges Umformteil ausgebildet, welches über eine Verfahrensfolge von Stanzen und ein- oder mehrfaches Umformen gebildet ist. Bei der Fertigung wird zunächst in einem ersten Fertigungsschritt aus einem ebenen Blechhalbzeug mit einer Dicke von zum Beispiel 7 mm ein Zwischenprodukt ausgetrennt, insbesondere ausgestanzt. Das Zwischenprodukt weist eine wie in der Figur 9 gezeigte Außenkontur und zudem ein Vorloch auf, welches zentral zu einem Hülsenabschnitt 61 angeordnet ist. In den nachfolgenden Umformschritten wird der Hülsenabschnitt 61 über ein ein- oder mehrstufiges Kragenziehen gebildet. Im Ergebnis weist der Schaltfingerträger 59 einen Ebenenabschnitt 62 auf, welcher als Funktionselemente die Mitnahmeflügel 54, den Schaltfingerabschnitt 6 und einen Kopplungsbereich 63 zur Ankopplung des Rastierblechs 22 umfasst. Der Mitnahmeflügel 54 ist in Draufsicht, wie sie beispielsweise in der Figur 11 gezeigt ist, als ein Teilkreisabschnitt ausgebildet, dessen Zentrum in der Schwenkachse des Schaltfingerträgers 59 gelegt ist. Der Schaltfingerabschnitt 6 ist am freien Ende beidseitig mit einer diagonal gegenüberliegenden Anprägung 64 versehen. Der Hülsenabschnitt 60 ist vom freien Innendurchmesser auf dem Außendurchmesser der Schaltwelle 4 angepasst und weist zwei Befestigungslöcher 66 auf, welche zur Aufnahme von Befestigungselementen ausgebildet sind, die eine verdrehfeste Befestigung des Schaltfingerträgers 59 auf der Schaltwelle 4 erlauben. Der Hülsenabschnitt 61 ist als ein abgestreckter Kragen ausgebildet, welcher innenseitig und außenseitig jeweils eine Zylindermantelfläche darstellt, die koaxial und konzentrisch zueinander verlaufen.

Die Figur 10 zeigt eine dreidimensionale Draufsicht auf die dem Hülsenabschnitt 61 abgewandte Seite des Schaltfingerträgers 59, wobei im Bereich des Hülsenabschnitts 61 eine umlaufende Abstufung 67 zu erkennen ist. Diese Abstufung ist Kennzeichen eines mehrstufigen Umformvorgangs, wobei in einem ersten Umformschritt die Abstufung 67 erzeugt und Material in Umformrichtung verschoben wird und in einem zweiten Umformschritt das bereits durchgezogene Material mittels Kragenziehen in den Hülsenabschnitt 61 umgeformt wird.

Wie sich insbesondere aus der Figur 12, welche eine seitliche Draufsicht auf den Schaltfingerträger 59 zeigt, ist die freie Länge des Hülsenabschnitts 60 in Längserstreckung der Schaltwelle 4 größer als die Dicke des Ebenenabschnitts 62. Durch das mindestens zweistufige Umformverfahren wird es ermöglicht, den Hülsenabschnitt 61 der dargestellten Länge zu realisieren, so dass eine ausreichende Sicherung des Schaltfingerträgers 59 gegen Verkippung erreichbar ist.

Die Figur 13 zeigt in einer ebenfalls schematischen dreidimensionalen Darstellung den Schaltfingerträger 59 mit aufgesetztem Rastierblech 22, wobei das Rastierblech 22 als ein im Querschnitt senkrecht zur Längserstreckung der Schaltwelle 4 umgedreht u-förmiges Blechformteil ausgebildet ist, welches mittels einer stoffschlüssigen Verbindung, insbesondere Schweißen an den Schaltfingerträger 59 befestigt ist. An der dem Schaltfingerträger 59 abgewandten Oberseite des Rastierblechs 22 weist dieses eine topologische Schaltkontur auf, über die eine Raste, welche in der Aussparung 21 angeordnet ist, bei Schalt- oder Wählbewegungen abrollt und Schalt- bzw. Rückstellkräfte erzeugt. In einer Mittelstellung rollt die Raste dabei über einen Wählkanal 68 ab, welcher ein absolutes Minimum 69 aufweist, so dass die Schaltwelle 4 sich automatisch auf diese Position zurückstellt. Senkrecht zu dem Wählkanal 68 sind Schaltkanäle 70 a, 70 b, etc. konturiert, über die die jeweiligen Schalt- bzw. Wählkräfte gesteuert werden.

Die Figuren 14 und 15 zeigen in ähnlicher Darstellung den Schaltfingerträger 60 gemäß dem erfindungsgemäßen Herstellverfahren, welcher in der Figur 8 als mittiger Schaltfingerträger 60 angeordnet ist. Die Herstellung des Schaltfingerträgers 60 erfolgt analog zu der Herstellung des Schaltfingerträgers 59, so dass auf die obige Beschreibung verwiesen wird. In Abgrenzung zu dem Schaltfingerträger 59 weist der Schaltfingerträger 60 neben dem Schaltfingerabschnitt 6 einen Führungsstift 20 auf, welcher in Bezug auf den Hülsenabschnitt 60 gegenüberliegend zu dem Schaltfingerabschnitt 6 angeordnet ist. Der Führungsstift 20 wird von eine Durchgangsbohrung 71 aufgenommen, welche von der Außenseite bis in die Abstufung 67 verläuft, so dass der Bereich der Abstufung 67 vorteilhaft ausgenutzt werden kann, ohne die Befestigung des Schaltfingerträgers 60 auf der Schaltwelle 4 zu stören. Mit seinem freien Ende ragt der Kulissenstift 20 in die Kulissenplatte 18 und wird dort über die eingebrachte Kulisse zwangsgeführt, so dass nur der Wählkanal 68 beziehungsweise die Schaltkanäle 70 a und folgende abgefahren werden können.

Die Figur 15 zeigt ein abgewandeltes Ausführungsbeispiel der Erfindung in einer schematischen dreidimensionalen Darstellung von der Seite, wobei ein Teil des Schaltdomgehäuses 4 zeichnerisch unterdrückt ist. Als Hauptunterschied zu dem Schaltdomgehäuse 4 in den vorhergehenden Figuren weist das Schaltdomgehäuse 4 in der Figur 15 Endanschläge 72 auf, welche so ausgebildet sind, dass diese den Verfahrweg von nicht-dargestellten Schaltschienen begrenzen. Die Endanschläge 72 kragen senkrecht zu der durch den Dichtbereich 32 gebildeten Dichtungsebene aus, sind im Querschnitt parallel zu der Dichtungsebene rechteckig ausgebildet und laufen verjüngend auf das eigene freie Ende zu. Die Breite in Längsrichtung des Schaltdomgehäuses 4 ist so angepasst, dass die Endanschläge 72 von mehreren Schaltschienen genutzt werden können. Jeweils zwei der Endanschläge 72 stehen sich in Querrichtung des Schaltdomgehäuses 4 gegenüber, so dass das jeweilige Paar der Endanschläge 72 einen beidseitigen Anschlag für die Schaltschienen bereitstellt. In der gezeigten Ausführungsform sind die Endanschläge 72 einstückig an das Schaltdomgehäuse angeformt, bei abgewandelten Ausführungsformen können die Endanschläge auch als separate Bauteile auf- bzw. eingesetzt sein. Der Vorteil der Integration der Endanschläge 72 in das Schaltdomgehäuse 4 liegt bei einer Verkleinerung der auftretenden Toleranzen hinsichtlich der Relativlage von Schaltschienen und Endanschlägen in Vergleich zu konventionellen Bauformen.

### Bezugszeichenliste

- 1: Schaltvorrichtung
- 2: Hebelwerk
- 3: Kugelköpfe
- 4: Schaltwelle
- 5: Schaltdomgehäuse
- 6: Schaltfingerabschnitt
- 7: 1. Kammerbereich
- 8: 2. Kammerbereich
- 9: Kulissenanordnung
- 10: Rastanordnung
- 11: Lagerbereich
- 12: Lagerbereich
- 13: 1. Durchgangsöffnung
- 14: 2. Durchgangsöffnung
- 15: Zwischensteg
- 16: Aufnahme
- 17: Befestigungsmittel
- 18: Kulissenplatte
- 19: freier Bereich
- 20: Führungsstift, Kulissenstift
- 21: Aussparung
- 22: Rastblech, Rastierblech
- 23: Seitenplatte
- 24: innere Lagerabdeckung
- 25: Einschnürungsbereich
- 26: 1. Kuppel
- 27: 2. Kuppel
- 28: Axialsteg
- 29: Lagerabdeckung
- 30: Aufnahme
- 31: Kopplungsöffnung
- 32: Dichtbereich
- 33: Durchgangslöcher
- 34: Entlüftungsaufnahme
- 35: Stopfen
- 36: Übertragungswählhebel
- 37: Übertragungsschalthebel
- 38: Schwenklager
- 39: Schwenkzapfen
- 40: Seitenstege
- 41: Verbindungsabschnitt
- 42: Rolle
- 43: Kappe
- 44: Sperrstift
- 45: 1. Sperrloch
- 46: 2. Sperrloch
- 47: Verriegelungsmechanismus
- 48: Verriegelungsblech
- 49: Schaltschienenmäuler
- 50: Sperrbereich
- 51: Langloch
- 52: Fixierstift
- 53: Mitnahmeöffnung
- 54: Mitnahmeflügel
- 55: Führungskanal
- 56: Steg
- 57: Bohrung
- 58: Sacklochabschnitt
- 59: Schaltfingerträger
- 60: Schaltfingerträger
- 61: Hülsenabschnitt
- 62: Ebenenabschnitt
- 63: Kopplungsbereich
- 64: Ausprägung
- 65: nicht verwendet
- 66: Befestigungslöcher
- 67: Abstufung
- 68: Wählkanal
- 69: Minimum
- 70 a, 70 b: Schaltkanäle
- 71: Durchgangsöffnung
- 72: Endanschläge

## Patentansprüche

1. Verfahren zur Herstellung einer Schaltfingeranordnung (59,60) für einen Schaltmechanismus (1) umfassend einen Fingerabschnitt (6), welcher für die Betätigung eines Mitnehmerelements ausgebildet ist, und einen Hülsenabschnitt (61), welcher zur Festlegung des Fingerabschnitts (6) auf einer Schaltwelle ausgebildet ist, wobei Fingerabschnitt (6) und Hülsenabschnitt (61) als ein gemeinsames Umformteil ausgebildet werden, **dadurch gekennzeichnet, dass**
- dass der Hülsenabschnitt (61) durch Kragenziehen aus einem ebenen Halbzeug gefertigt wird und
- dass dem Kragenziehen ein Vorlochen des ebenen Halbzeugs vorgeschaltet wird.

2. Verfahren nach Anspruch 1, **dadurch gekennzeichnet, dass** die Außenkontur des Fingerabschnitts (6) durch einen Trennschritt, insbesondere durch eine Stanzung erzeugt wird.

3. Verfahren nach einem der vorhergehenden Ansprüche, **dadurch gekennzeichnet, dass** das Halbzeug eine Dicke von mehr als 5 mm, vorzugsweise mehr als 6 mm, und/oder weniger als 10 mm, vorzugsweise weniger als 9 mm aufweist.

4. Verfahren nach einem der vorhergehenden Ansprüche, **dadurch gekennzeichnet, dass** die Länge des Hülsenabschnitts (61) größer als die Dicke des Halbzeugs ausgebildet wird.

5. Verfahren nach einem der vorhergehenden Ansprüche, **gekennzeichnet durch** die Anordnung eines Führungsstifts (20) in dem Umformteil zur Führung in einer Schaltkulisse (18).

6. Verfahren nach einem der vorhergehenden Ansprüche, **gekennzeichnet durch** die Anordnung einer eine Rastkontur aufweisenden Rastierplatte (22) auf dem Umformteil.

7. Verfahren nach Anspruch 6, **dadurch gekennzeichnet, dass** die Rastierplatte (22) stoffschlüssig an dem Umformteil (6) befestigt wird.

8. Verfahren nach einem der vorhergehenden Ansprüche, **dadurch gekennzeichnet, dass** das Umformteil mindestens mit einem Mitnahmeflügel (54) versehen wird, welcher zur Mitnahme einer Verriegelungsschiene (48) ausgebildet ist.

## Claims

1. Method for producing a shift finger arrangement (59, 60) for a shift mechanism (1), comprising a finger portion (6) which is designed for actuating a driver element, and comprising a sleeve portion (61) which is designed for fixing the finger portion (6) to a shift shaft, wherein the finger portion (6) and the sleeve portion (61) are configured as a common formed part, **characterized**
- **in that** the sleeve portion (61) is produced from a planar semifinished part by collar forming, and
- **in that** the collar forming is preceded by predrilling of the planar semifinished part.

2. Method according to Claim 1, **characterized in that** the outer contour of the finger portion (6) is produced by means of a cutting step, in particular by means of a punching process.

3. Method according to one of the preceding claims, **characterized in that** the semifinished part has a thickness of more than 5 mm, preferably of more than 6 mm, and/or of less than 10 mm, preferably less than 9 mm.

4. Method according to one of the preceding claims, **characterized in that** the length of the sleeve portion (61) is configured so as to be greater than the thickness of the semifinished part.

5. Method according to one of the preceding claims, **characterized by** the arrangement of a guide pin (20) in the formed part for guidance in a shift gate (18).

6. Method according to one of the preceding claims, **characterized by** the arrangement of a detent plate (22), which has a detent contour, on the formed part.

7. Method according to Claim 6, **characterized in that** the detent plate (22) is fastened in a cohesive manner to the formed part (6).

8. Method according to one of the preceding claims, **characterized in that** the formed part is provided at least with a driving wing (54) which is designed for driving a locking rail (48).

## Revendications

1. Procédé de fabrication d'un agencement de doigt de changement de vitesse (59, 60) pour un mécanisme de changement de vitesse (1), comprenant une portion de doigt (6) qui est réalisée pour l'actionnement d'un élément d'entraînement, et une portion de douille (61) qui est réalisée pour fixer la portion de doigt (6) sur un arbre de changement de vitesse, la portion de doigt (6) et la portion de douille (61) étant réalisées sous forme de pièce façonnée commune, **caractérisé en ce que**
- la portion de douille (61) est fabriquée par soyage à partir d'un produit, semi-fini plan, et
- le soyage est précédé d'un pré-poinçonnage du produit semi-fini plan.

2. Procédé selon la revendication 1, **caractérisé en ce que** le contour extérieur de la portion de doigt (6) est produit par une étape de séparation, en particulier un estampage.

3. Procédé selon l'une quelconque des revendications précédentes, **caractérisé en ce que** le produit semi-fini présente une épaisseur de plus de 5 mm, de préférence de plus de 6 mm, et/ou inférieure à 10 mm, de préférence inférieure à 9 mm.

4. Procédé selon l'une quelconque des revendications précédentes, **caractérisé en ce que** la longueur de la portion de douille (61) est supérieure à l'épaisseur du produit semi-fini.

5. Procédé selon l'une quelconque des revendications précédentes, **caractérisé par** l'agencement d'une goupille de guidage (20) dans la partie façonnée, en vue du guidage dans une coulisse de changement de vitesse (18).

6. Procédé selon l'une quelconque des revendications précédentes, **caractérisé par** l'agencement d'une plaque d'encliquetage (22) présentant un contour d'encliquetage sur la pièce façonnée.

7. Procédé selon la revendications 6, **caractérisé en ce que** la plaque d'encliquetage (22) est fixée par engagement par liaison de matière à la pièce façonnée (6).

8. Procédé selon l'une quelconque des revendications précédentes, **caractérisé en ce que** la pièce façonnée est pourvue d'au moins une aile d'entraînement (54), qui est réalisée pour entraîner un rail de verrouillage (48).
